Europäisches Patentamt

European Patent Office

Office européen des brevets

(11) Publication number: **0 004 431**
**B1**

# EUROPEAN PATENT SPECIFICATION

(45) Date of publication of patent specification: **09.09.81**

(21) Application number: **79300373.2**

(22) Date of filing: **12.03.79**

(51) Int. Cl.³: **C 22 B 3/00, C 12 P 3/00**
**//C12R1/80**

(54) Bacterial leaching of minerals.

(30) Priority: **23.03.78 GB 1154178**

(43) Date of publication of application:
**03.10.79 Bulletin 79/20**

(45) Publication of the grant of the European patent:
**09.09.81 Bulletin 81/36**

(84) Designated Contracting States:
**BE CH DE FR GB IT LU NL SE**

(56) References cited:
**FR - A - 2 169 263**
**FR - A - 2 278 631**
**US - A - 3 266 889**
**US - A - 3 268 288**
**US - A - 3 679 397**

(73) Proprietor: **Interox Chemicals Limited**
**Hanover House Hanover Square**
**London W1R 0BE (GB)**

(72) Inventor: **Crampton, Clifford Archibald**
**Avenue Des Chasseurs 35**
**B-1410 Waterloo (BE)**

(74) Representative: **Caldwell, Arthur Noel et al,**
**Group Patent Department LAPORTE INDUSTRIES**
**LIMITED P.O.Box 8 Kingsway**
**Luton, Bedfordshire LU4 8EW (GB)**

Courier Press, Leamington Spa, England.

# 0 004 431

Bacterial leaching of minerals.

The present invention relates to methods of leaching minerals in order to extract metal values in a soluble state. More particularly the invention relates to the micro-biological leaching of these metallic ores.

It is known that sulphide ores frequently contain ferrous iron, either as such or in combination with other metals forming more complex sulphides. It is also known that certain varieties of bacteria, chiefly those known as *Thiobacilli* (including *Ferrobacilli*) and more specifically *Thiobacillus ferroa-oxidans* and *Thiobacillus thio-oxidans,* have the ability to oxidise the sulphide and ferrous ions to sulphate and ferric ions, which, in aqueous solution, are known to have the ability to leach other minerals, such as ores of uranium (and other actinides), cadmium, cobalt, tin, titanium, copper, nickel, zinc and molybdenum for example. Thus, valuable metals are leached, probably as soluble sulphate species. Although these bacteria occur naturally in association with mineral ores they are not generally very resistant to acid leaching solutions so that the natural leaching effect is limited. Various measures have been proposed to enhance the effect.

A review of the techniques used generally in this art was published by O.H. Tuovinen et al in International Metallurgical Reviews 1974 Vol 19 No. 179. More specifically, it is known from US 3268288 that bacteria, specifically certain *Thiobacillus*, can be used in the presence of ferric iron and sulphuric acid to solubilise uranium values in the presence of air. Similarly these bacteria are known from FR 2278 631 to be able to oxidise ferrous iron to ferric iron in the presence of air, desirably enriched in oxygen and carbon dioxide.

Since these bacteria are aerobic an adequate supply of oxygen is necessary to maintain them active. The leach liquors have been aerated even if only by being used in such a way that there is an exposure to the atmosphere.

It is an object of the present invention to provide means for improving the effectiveness of this microbiological leaching technique.

According to the present invention, there is provided a process for the bacterial leaching of ores using thiobacilli in the presence of oxygen to extract metal values from such ores, characterised in that the oxygen is supplied in the form of a compound containing a peroxidic group.

The term "leaching or ores" should be construed widely enough to encompass the bacterial treatment of ores in situ, mined ores, dressed ores, partly leached ores, waste, slimes and leach liquors for example.

The available combined oxygen may be supplied in solution, e.g. in the form of hydrogen peroxide, or in a solid form using a percompound such as peroxide, perdisulphate, hydrogen peroxide addition compounds such as percarbonate, or the like. The choice of a solid or liquid source for the combined oxygen will depend upon the precise leaching operation being conducted.

As explained in the said review article, the action of acid resistant strains of *Thiobacillus ferro-odixans* in dilute sulphuric acid is to oxidise ferrous sulphate to ferric sulphate and it is known that ferric sulphate will react with, for example uranium dioxide, in order to produce uranyl sulphate and ferrous sulphate. *Thiobacillus ferro-oxidans* and also to some extent *Thiobacillus sulpho-oxidans* are capable of oxidising sulphides and possibly even elemental sulphur to give sulphate ions and these sulphate ions may, if the acidity conditions are right, directly leach the wanted ore or, if they are associated with iron sulphides orginally, they may give rise to ferric sulphate which will leach the ores as described above.

Desirably, therefore, the ores to be leached also contain iron compounds and specifically iron sulphides. It should be mentioned that in the event that the ore does not contain any iron compounds it may be desirable to add them, but such a condition is unlikely to be met in practice. Finally, if the ore does not contain any natural sulphides at all, these may be added to promote the leaching effect or a chemical equivalent can be achieved by adding natural sulphur. It should be explained finally that although the application of the invention to the leaching of iron ores in order to obtain iron values is not excluded, such an operation is unlikely to prove commercially viable. The invention will therefore normally be directed to the leaching of the more valuable minerals However the invention may be applied to oxidising ferrous liquors to ferric, for example in order to use them as ferric leach liquors.

We prefer to operate using *Thiobacillus ferro-oxidans* which is essentially characterised by its ability to oxidise ferrous iron in acidic solutions. We prefer to use selected acid-resistant strains which can operate down to pH 1.0 for example the Beck Strain (ATCC 13,598: NCIB 8,451), the Lundgren strain (ATCC 13,661); the Sutton strain (ATCC 13,728); the Trussel strain (ATCC 19,859; NCIB 9,490) and a strain deposited in the American Type Culture Collection, Washington D.C., under the number ATCC 12,241. Another suitable strain is one found in Mount Lywll, Tasmania and identified by D. Lacey and F. Lawson in the Journal "Biotechnology and Bio-Engineering" 1970 Vol 12 Pages 29—50.

It is also desirable to supply nutrients for the bacteria and suitable nutrients may include, in suitable predetermined quantities, sources of nitrogen, phosphorus and carbon dioxide. Typically suitable nutrient media are (i) that of Silverman and Lundgren known in the art as 9k medium (See Journal South African Inst. of Mining and Metallurgy, Larch 1972, Page 225); and (ii) a modification of the 9k medium where the ammonium sulphate concentration is doubled and the phosphate

2

concentration is reduced to 20% of the standard figure.

Hitherto the leaching procedure has been carried out in situ or upon mined ore afer a suitable crushing or dressing operation and aeration of the leach liquor to add oxygen has provided the addition of carbon dioxide, see for example US Patent 3 6077 235. In practising the present invention the use of aeration is not precluded in order to effect the addition of carbon dioxide. However carbon dioxide can be provided by other means.

It is known that these bacteria are more efficient in their leaching operation at elevated temperatures and this suggests that the leaching of this invention should be applied to extracted ore under controlled temperature conditions normally at least 20°C up to 70°C, the higher end of the range, i.e. 50 to 70°C, being used in conjunction with strains of bacteria that are or have been conditioned to be tolerant of such temperatures. On the other hand in situ leaching of the ore body before it is removed from the mine may be cheaper (although it may be slower) and in suitable circumstances may therefore be preferred. Suitable selection of the bacteria and leach liquor having regard to the conditions of leaching, e.g. metals present, temperature and pH, will improve the yield.

We have demonstrated satisfactorily that the oxygen requirements of aerobic bacteria can be provided by hydrogen peroxide and other peroxidic species, but it is not clear from our studies whether the bacteria utilise the peroxidic species directly or whether they uptake oxygen from the water. Clearly the use of peroxidic species, including those which are slow to dissolve in water, can supply a level of oxygen in the water, both combined and dissolved, which is greater than can be maintained by the simple injection of air as by sparging, particularly having regard to the low solubility of oxygen at low temperatures. The precise mechanism of utilisation of the oxygen by the bacteria is however clearly not important.

It will be understood that the use of dissolved peroxygen species can permit the supply of available oxygen much more readily than the use of an air sparge or the like since it can be supplied closer to the point of utilisation. Thus for example hydrogen peroxide can be supplied adjacent to a natural ore body. In the case of the leaching of heaps of dressed ore, it is normally found that the aeration introduces so little oxygen that this is only supplied to the bacteria close to the surface of the heap, with the result that the bottom of the heap may even contain sulphate-reducing bacteria. This extremely inefficient or undesirable situation can be avoided by the use of the present invention. Particularly in the case of large heaps direct injection of hydrogen peroxide into the heaps may be desirable. The use of solid peroxygen species is also of general applicability to the leaching of heaps of ore since the solid species can be incorporated in the heaps as they are built.

Since hydrogen peroxide can also function as a bactericide and indeed has been known for many years as a general disinfectant, it is therefore desirable to supply it in diluted form in order that it should not kill the bacteria it is supposed to supply with oxygen for their growth. A suitably safe level is diluted in water to approximately 100 milligrams of hydrogen peroxide per litre of water.

The result of a leaching operation in accordance with the present invention will be a solution containing sulphate ion and the ions of the metal values that are of interest. This dilute solution is then worked up in known fashion.

As explained, the bacteria occur naturally in association with mineral ores and known techniques permit the selection of strains of bacteria which are tolerant to acid and tolerant to the metals present in the ores. However, for our experiments we did not use specially tolerant strains of bacteria and under the conditions used we found no inhibiting effects. If we had used specially selected strains of bacteria, it would have been possible to operate at lower pH values and at higher metal ion concentrations.

Two series of experiments were carried out, the first using *Thiobacillus ferro-oxidans,* identified as strain TF (ATCC 23270), and the second using a *Thiobacillus* sp. identified as TH1, which is capable of growth on miner sulphides such as pyrites.

The bacteria TF was grown in a medium comprising, in grams per litre:—

| | |
|---|---|
| $K_2HPO_4$ | 0.4 |
| $(NH_4)_2SO_4$ | 0.4 |
| $MgSO_4 \cdot 7H_2O$ | 0.4 |
| $FeSO_4\ 7H_2O$ | 27.8 |

The pH was adjusted to 1.5 using sulphuric acid. The cultures (100 ml) were incubated in 250 ml conical flasks at 30°C and 140 rev/min in an orbital shaker. The growth of the bacteria followed the standard growth curve with a lag phase initially of up to 14 days. The progress of the growth was followed by a standard form of analysis for both ferric and ferrous iron and better than 95% conversion to ferric iorn was achieved. In order to provide stock cultures, 2% by volume inocula were taken when at least 95% of the iron had been oxidized. After serial culture in this way the lag phase fell to approximately 1 day.

The oxygen in available combined form was used in the experiments in the form of dilute hydrogen peroxide and the quantities given herein are quoted as 100% $H_2O_2$. It is known that hydrogen peroxide oxidises ferrous iron to ferric iron.

In order to check the effect of hydrogen peroxide on the bacteria, hydrogen peroxide equivalent to approximately 25% conversion to ferric iron was added to the growing cultures at different points in the growth curve, giving a concentration of 100 mg/l hydrogen peroxide. No inhibition effect was detected, as the growth curves maintained the same shape and the cultures could be used as inocula. The normal content of oxygen in a leach liquor is of the order of 5—7 mg/l and the initial object of the experiments was to double this oxygen content by adding approximately 10 mg/l oxygen as hydrogen peroxide, i.e. 10% of the above addition.

A further experiment was carried out using cultures after full conversion to ferric iron. To separate samples of these cultures were added 10, 100 and 1000 mg/l of hydrogen peroxide. The decomposition of the hydrogen peroxide was monitored and was shown to be approximately first order, thus indicating that substantially complete conversion to ferric iron had taken place. The cultures were used as inocula after standing for 24 hours and it was found that the culture to which 1000 mg/l of hydrogen peroxide had been added showed evidence of destruction of some, but not all, of the bacteria. Thus for these bacteria under these conditions, the toxic level of hydrogen peroxide was established.

In the first series of experiments using the bacterium TF attempts were made to extract the uranium content of a uranium ore from Buffelsfontein in South Africa. This ore contains 250 mg uranium per kg and was made up into a pulp or paste at 10 gms of ore per 100 ml, corresponding to an approximate uranium concentration of 25 mg/l uranium. In addition the culture medium contained potassium, ammonium, and magnesium as above described but no added iron as the iron content of the ore was sufficient to obtain leaching. Before the experiments began the bacteria strain was checked for tolerance to uranium and it was found that it would withstand concentrations of the order of 700 mg/l uranium, well in excess of any figures likely to be obtained. Throughout the experiments the initial culture medium was made up and was then inoculated at time t=0 with 2% by volume of a growing culture; 10 ml samples were withdrawn at intervals and analysed. It will be appreciated that it is very difficult to ensure that the samples withdrawn are homogeneous and especially towards the end of an experiment the amount remaining in the flask was very small. Nevertheless, in spite of these difficulties inherent in the techniques that have to be used and the inherent variability in microbiological procedures, a clear effect was demonstrated.

It will be appreciated that, as in the experiments to test the tolerance of the bacteria to hydrogen peroxide, the addition of hydrogen peroxide to the ore pulp will result in oxidation of ferrous iron to ferric iron. It will also be appreciated that ferric iron reacts with the uranium in the ore in order to convert the insoluble quadravalent uranium into soluble hexavalent uranium, with a corresponding reduction of the ferric iron to ferrous iron. In order to avoid the errors that would be involved in using an inoculum containing ferric iron, the inoculum was centrifuged and washed three times to remove iron. A preliminary experiment was done in which no centrifuge washing was carried out but iron was deliberately added to correspond to the iron contained with the bacteria and it was found that the washing procedure introduced no harmful effect. In all cases parallel experiments were run, being started and stopped together in order to reduce the variables.

Experiment 1

The object of this experiment was to demonstrate the ability of the bacteria to leach uranium under aerobic conditions.

Table 1 represents the results of two experiments *1a* and *1b*. In experiment *1a* no bacteria were added, whilst in experiment *1b* the bacteria were added as above described. The gas space above the pulp in the flask contained air and its oxygen content was slowly absorbed by the pulp in order to give slow oxidation of ferrous iron to, ferric iron and consequent leaching of the uranium. Under these conditions, the efficiency of the bacteria in leaching uranium from its ore is clearly demonstrated, at being remembered that the samples contain 25 mg/l uranium.

TABLE 1

| Time (hours) | Concentrations mg / l | | | | | |
|---|---|---|---|---|---|---|
| | Uranium | | Ferrous iron | | Ferric iron | |
| | a | b | a | b | a | b |
| 0 | <3 | <3 | 17 | 15 | 1 | 4 |
| 23 | 3 | 5 | 54 | 0 | 7 | 9 |
| 65 | 5 | 12 | 71 | 6 | 6 | 32 |
| 143 | 3 | 17 | 80 | 48 | 0 | 346 |
| 233 | 4 | 22 | 97 | 88 | 0 | 893 |

Experiment 2

The object of this experiment was to demonstrate the ineffectiveness of hydrogen peroxide to leach uranium from the ore, in the absence of bacteria, and to simulate anaerobic conditions.

In experiment 2, the results of which are shown in Table 2, the procedure in experiment 1 was followed except that at the start of the experiments, 14 mg/l hydrogen peroxide were added to the pulp, this being approximately twice the stoichiometric amount of hydrogen peroxide required to oxidise all the uranium. That this oxidation did not in fact take place is clearly shown from the table, the reason being that the ferrous iron present in the pulp caused the immediate decomposition of the hydrogen peroxide. In experiment 2a no bacteria were present whereas in experiment 2b the bacteria were added as above described. At time 168 hours it was discovered that the method of analysis used for uranium was suspect and therefore the method was changed to a more accurate method. The results shown in Table 1 and 2 may therefore not be comparable with each other, although in both cases the results of experiments a and b. are comparable. Table 2 clearly demonstrates that the addition of hydrogen peroxide does not increase the leaching of uranium from the ore in the absence of bacteria.

The experiments of Table 1, since they were conducted with air above the culture, correspond to the fully aerated leach liquors that are desirable in theory but unobtainable in practice. In order to simulate practical leaching conditions, in experiment 2, the air space above the culture in the flask was purged three times with nitrogen atmosphere above the culture. It should be noted that this procedure does not remove the air dissolved in the culture and no continuous purge of nitrogen was used; the conditions therefore closely simulate heap leaching.

The results of experiment 2b clearly demonstrate that hydrogen peroxide can be used to replace the air and enable the bacteria to grow and oxidise the ferrous iron with consequent leaching of the uranium.

In order to check whether a source of carbon was necessary in order to enable the bacteria to grow, at time 265 hours 10 ml of carbon dioxide was added to the gas phase above the culture. It will be seen that no significant change occurred.

# 0 004 431

TABLE 2

| Time (hours) | Concentrations mg / l | | | | | |
| --- | --- | --- | --- | --- | --- | --- |
| | Uranium | | Ferrous iron | | Ferric iron | |
| | a | b | a | b | a | b |
| 0 | <3 | <3 | 27 | 2 | 3 | 2 |
| 24 | <3 | 4 | 40 | 0 | 4 | 6 |
| 96 | <3 | 6 | 80 | 1 | 2 | 13 |
| 168 | — | — | 89 | 5 | 3 | — |
| 264 | 1.3 | 9 | 97 | 37 | 4 | 14 |
| 360 | 1.3 | 12 | 89 | 76 | 1 | 14 |
| 432 | 1.0 | 13 | 89 | 80 | 3 | 35 |

For the second series of experiments *Thiobacillus sp.* identified as TH1 was used. For further information on this *Thiobacillus* see Norris et al FEMS Microbiology Letters 4 (1978) 143—146. The bacteria was maintained by serial transfer in a pyrites medium. The culture medium contain potassium, ammonium and magnesium as for the bacteria TF but in place of the iron the culture medium contained 10 g/l of pyrites. The samples of pyrites used came from Tharsis in Spain and was ground to less than 74 $\mu$m. The pH of this culture medium was adjusted to 2.0.

It should be pointed out that this bacterium appears to grow on the solid substrate and therefore the inoculum used was 2% of the suspension.

Initial checks showed that this bacterium was sufficiently tolerant to hydrogen peroxide and copper for the experiments to continue but a specially selected strain was not developed.

In the second series of the experiments, the ore chalcopyrite was used, being ground to less than 105 $\mu$m before being used. A check using sterilised ore showed that sterilisation was unnecessary. This ore contains approximately 213 g/kg copper and 273 g/kg iron. The culture medium for the experiments contained 10 g/l chalcopyrites, corresponding approximately to a concentration of 2 g/l copper.

Experiment 3

The object of this experiment was to demonstrate the ability of the bacteria to leach copper from the ore under aerobic conditions. Consequently the atmosphere above the culture medium was air.

The inoculum used was a suspension of the stock culture and therefore contained free iron. In experiment *3b*, the pulp was inoculated with the bacteria whilst in experiment *3a*, an iron-containing but bacteria-free "inoculum" was used. This experiment clearly shows in Table 3, that the bacteria can leach copper from the ore under these conditions.

6

TABLE 3

| Time (hours) | Concentrations mg / l | | | | | |
|---|---|---|---|---|---|---|
| | Copper | | Ferrous iron | | Ferric iron | |
| | a | b | a | b | a | b |
| 0 | 22 | 18 | 66 | 63 | 127 | 136 |
| 44 | 92 | 88 | 207 | 168 | 7 | 22 |
| 187 | 136 | 182 | 256 | 127 | 8 | 80 |
| 279 | 158 | 236 | 244 | 56 | 34 | 281 |
| 360 | 170 | 280 | — | 56 | 44 | 449 |
| 450 | 190 | 320 | 276 | 117 | — | 649 |
| 546 | 175 | 350 | 256 | 103 | 29 | 905 |
| 618 | 210 | 380 | 254 | 85 | 34 | 1042 |

Experiment 4

The object of this experiment was to demonstrate the inefficiency of the bacteria in leaching copper under anaerobic conditions.

Thus in this experiment, nitrogen replaced the air above the culture in order to simulate normal leaching conditions. In experiment *4c* hydrogen peroxide was added at the start in an amount equivalent to 100 mg per litre but the culture contained no bacteria, so that experiment *4a* demonstrates solely the effect of hydrogen peroxide. In experiment *4b*, the hydrogen peroxide was added as in experiment *4a* but additionally the culture was inoculated with bacteria. The results of these experiments shown in Table 4 demonstrate the importance, by contrast with experiment 3, of the importance of oxygen to the process and by contrast between the two parts of this experiment to the activity of the bacteria in promoting leaching of the copper. Clearly this experiment also demonstrates that the presence of hydrogen peroxide promotes the activity of the bacteria under simulated leaching conditions. In Table 4 the differences in iron concentration a time of t=O as compared with Table 3 is due to the effect of the iron contained in the inoculum, since in experiment *4b* washed pyrite was used as the inoculum and no iron was added in experiment *4a*.

TABLE 4

| Time (hours) | Concentrations mg / l | | | | | |
|---|---|---|---|---|---|---|
| | Copper | | Ferrous iron | | Ferric iron | |
| | a | b | a | b | a | b |
| 0 | 55 | 93 | 14 | 146 | 6 | 142 |
| 24 | 86 | 108 | 54 | 149 | 2 | 63 |
| 96 | 120 | 140 | 105 | 234 | 15 | 88 |
| 168 | 114 | 174 | 127 | 315 | 7 | 37 |
| 264 | 126 | 186 | 139 | 373 | 7 | 61 |
| 360 | 108 | 192 | 132 | 478 | 7 | 10 |
| 432 | 130 | 210 | 154 | 412 | 0 | 68 |

Experiment 5

The object of this experiment was to determine whether in addition of the hydrogen peroxide in stages would be beneficial, under anaerobic conditions.

In this experiment, the results of which are given in Table 5, the ore was again chalcopyrites, but the hydrogen peroxide was added in 0.2 cc amounts (each of concentration 10 g/l hydrogen peroxide) four times in every working day. The first addition of hydrogen peroxide was made at time t=0 which was after the conclusion of a lag phase of 18 hours. In experiment 5a no hydrogen peroxide was used, but the pulp was inoculated with the standard inoculum of bacteria on pyrites. In experiment 5b the hydrogen peroxide was added to the pulp to which the bacteria inoculum had been added. It will be observed from the paper by Norris et al referred to above, that he believed it to be necessary to add a yeast extract to promote the growth of the bacillium TH1 and therefore in this experiment such yeast extract (1 ml of extract containing 20 g/l yeast extract) was added at time t=95.

The results in Table 5 indicate that there is difficulty in measuring the iron content under these conditions and we believe that this is either due to a yeast/iron complex which may be a solid and so is removed before the analysis is conducted or alternatively that, since the bacteria require iron for their metabolism, under low concentrations of iron they may produce iron complexing agents which contribute to the difficulties of analysis. However, Table 5 shows quite clearly the effectiveness of the addition of hydrogen peroxide in substantially doubling the total extraction of copper from the ore sample.

TABLE 5

| Time (hours) | Concentrations mg / l | | | | | |
| --- | --- | --- | --- | --- | --- | --- |
| | Copper | | Ferrous iron | | Ferric iron | |
| | a | b | a | b | a | b |
| 0 | 72 | 73 | 152 | 145 | 12 | 16 |
| 24 | 80 | 104 | 179 | 64 | 0 | 1 |
| 48 | 84 | 132 | 195 | 70 | 0 | 1 |
| 94 | 88 | 156 | 197 | 73 | 6 | 10 |
| 142 | 90 | 180 | 96 | 81 | 2 | 6 |
| 190 | 98 | 186 | 46 | 98 | 53 | 14 |
| 262 | 116 | 200 | 34 | 114 | 61 | 52 |

Although the invention has only been demonstrated herein in respect of two ores, it will be appreciated that it can be applied to any leaching operating using aerobic bacteria, in itself a known technique.

Claims

1. A process for the bacterial leaching of ores using thiobacilli in the presence of oxygen to extract metal values from such ores, characterised in that the oxygen is supplied in the form of a compound containing a peroxidic group.

2. A process as claimed in claim 1 wherein the available combined oxygen is supplied in solution form.

3. A process as claimed in claim 2 wherein the available combined oxygen is supplied as hydrogen peroxide solution.

4. A process as claimed in claim 1 wherein the available combined oxygen is supplied in solid form.

5. A process as claimed in claim 4, wherein the available combined oxygen is supplied as a percompound.

6. A process as claimed in claim 4 wherein the available combined oxygen is supplied as a peroxide addition compound.

7. A process as claimed in any of the preceding claims, wherein the leaching is effected in the presence of compounds of iron and sulphur and under acid conditions.

8. A process as claimed in claim 1 and 7 wherein the sulphur is present as sulphate and the bacteria is *Thiobacillus ferro-oxidans.*

9. A process as claimed in claim 8 wherein nitrogen, phosphorous and carbon dioxide are supplied as nutrients.

10. A process as claimed in claim 1 and 7, wherein the sulphur is present as sulphide and the bacteria is *Thiobacillus sp.* strain TH1.

11. A process as claimed in claim 10 wherein nitrogen, phosphorous and yeast are supplied as nutrients.

12. A process as claimed in any preceding claim wherein the leaching is carried out at temperature in the range of from 20°C to 70°C.

Revendications

1. Procédé de lixiviation bactérienne de minerais utilisant des thiobacilles en présence d'oxygène pour extraire des composés métalliques de ce minerais caractérisé en ce que l'oxygène est apporté sous la forme d'un composé contenant un groupe peroxyde.

2. Procédé suivant la revendication 1 caractérisé en ce que l'oxygène combiné disponible est apporté à l'état de solution.

3. Procédé suivant la revendication 2 caractérisé en ce que l'oxygène combiné disponible est apporté à l'état d'une solution de peroxyde d'hydrogène.

4. Procédé suivant la revendication 1 caractérisé en ce que l'oxygène combiné disponible est apporté à l'état solide.

5. Procédé suivant la revendication 4 caractérisé en ce que l'oxygène combiné disponible est apporté à l'état d'un percomposé.

6. Procédé suivant la revendication 4 caractérisé en ce que l'oxygène combiné disponible est apporté à l'état d'un composé d'addition de peroxyde.

7. Procédé suivant l'une quelconque des revendications précédentes caractérisé en ce que la lixiviation est effectuée en présence de composés de fer et de soufre et dans des conditions acides.

8. Procédé suivant les revendications 1 à 7 caractérisé en ce que le soufre est présent à l'état de sulfate et en ce que la bactérie est le *Thiobacillus ferro-oxidans.*

9. Procédé suivant la revendication 8 caractérisé en ce qu'on apporte de l'azote, du phosphore et de l'anhydride carbonique comme éléments nutritifs.

10. Procédé suivant les revendications 1 et 7 caractérisé en ce que le soufre est présent à l'état de sulfure et en ce que la bactérie est le *Thiobacillus sp.,* souche TH1.

11. Procédé suivant la revendication 10 caractérisé en ce qu'on apporte de l'azote, du phosphore et de la levure comme éléments nutritifs.

12. Procédé suivant l'une quelconque des revendications précédentes caractérisé en ce qu'on effectue la lixiviation dans la gamme de températures de 20°C à 70°C.

## Patentansprüche

1. Verfahren zum bakteriellen Auslagen von Erzen unter Verwendung von Thiobacilli in Gegenwart von Sauerstoff, um Metallwerte aus diesen Erzen zu extrahieren, dadurch gekennzeichnet, daß der Sauerstoff in Form einer eine Peroxidgruppe enthaltenden Verbindung zur Verfügung gestellt wird.

2. Verfahren gemäß Anspruch 1, wobei der verfügbare gebundene Sauerstoff in Form einer Lösung zugesetzt wird.

3. Verfahren gemäß Anspruch 2, wobei der verfügbare gebundene Sauerstoff als Wasserstoffperoxidlösung zugesetzt wird.

4. Verfahren gemäß Anspruch 1, wobei der verfügbare gebundene Sauerstoff in fester Form zugesetzt wird.

5. Verfahren gemäß Anspruch 4, wobei der verfügbare gebundene Sauerstoff als Perverbindung zugesetzt wird.

6. Verfahren gemäß Anspruch 4, wobei der verfügbare gebundene Sauerstoff als Peroxid-Additionsverbindung zugesetzt wird.

7. Verfahren gemäß einem der vorstehenden Ansprüche, wobei das Auslagen in Gegenwart von Eisen- und Schwefelverbindungen und unter sauren Bedingungen durchgeführt wird.

8. Verfahren gemäß Anspruch 1 und 7, wobei der Schwefel als Sulfat vorliegt und das Bakterium Thiobacillus ferro-oxidans ist.

9. Verfahren gemäß Anspruch 8, wobei Stickstoff, Phosphor und Kohlendioxid als Nährstoffe zugesetzt werden.

10. Verfahren gemäß Anspruch 1 und 7, wobei der Schwefel als Sulfid vorliegt und da Bakterium Thiobacillus sp. Stamm TH1 ist.

11. Verfahren gemäß Anspruch 10, wobei Stickstoff, Phosphor und Hefe als Nährstoffe zugesetzt werden.

12. Verfahren gemäß einem der vorstehenden Ansprüche, wobei das Auslagen bei einer Temperatur im Bereich von 20 bis 70°C durchgeführt wird.